# EUROPEAN PATENT SPECIFICATION

(11) **EP 4 160 138 B1**
(45) Date of publication and mention of the grant of the patent: **30.07.2025**
(21) Application number: 21851086.5
(22) Date of filing: 20.04.2021
(51) Int. Cl.: G01B 7/00, G01N 27/90

(54) **INSPECTION APPARATUS, INSPECTION SYSTEM, INSPECTION METHOD, AND MEMBER REPAIRING METHOD**
INSPEKTIONSVORRICHTUNG, INSPEKTIONSSYSTEM, INSPEKTIONSVERFAHREN UND ELEMENTREPARATURVERFAHREN
APPAREIL D'INSPECTION, SYSTÈME D'INSPECTION, PROCÉDÉ D'INSPECTION ET PROCÉDÉ DE RÉPARATION D'ÉLÉMENT

(30) Priority: 31.07.2020 JP 2020129888
(43) Date of publication of application: 05.04.2023
(73) Proprietor: JFE Steel Corporation, Tokyo 100-0011 (JP)
(72) Inventor: TOKUMOTO, Yuta, Tokyo 100-0011 (JP); NISHIZAWA, Yuji, Tokyo 100-0011 (JP); ISHIDA, Kyohei, Tokyo 100-0011 (JP)
(74) Representative: Grünecker Patent- und Rechtsanwälte PartG mbB
(86) International application number: PCT/JP2021/016093
(87) International publication number: WO 2022/024478

(56) References cited:
- WO-A1-2020/154035
- CN-A- 111 398 411
- CN-B- 103 267 476
- GB-A- 2 262 346
- JP-A- 2004 168 088
- JP-A- 2008 032 575
- JP-A- 2017 026 354
- JP-A- 2017 512 975
- US-A1- 2015 153 312

## Description

### Technical Field

The present invention relates to an inspection apparatus, an inspection system, and an inspection method that are used to detect flaws, such as wall-thinning and cracking, caused by corrosion of or damage to an inspection object member which is, for example, a hollow steel member, such as a pipe or a tank. The present invention also relates to a repair method for such a member.

### Background Art

Various inspection methods are known which are used to detect flaws, such as wall-thinning and cracking, caused by corrosion of or damage to an inspection object member which is, for example, a hollow steel member, such as a pipe or a tank. To inspect an inspection object member over a wide range, for example, Patent Literatures 1 to 3 each disclose an inspection apparatus that uses magnetic wheels to run while being attracted to the surface of the inspection object member. The inspection apparatuses disclosed in Patent Literatures 1 and 2 adopt an ultrasonic inspection method, whereas the inspection apparatus disclosed in Patent Literature 3 adopts an inspection method using eddy current by a coil.

In further prior art, CN 103267476 B discloses a device for detecting defects of an iron-based closed container.

### Citation List

### Patent Literature

PTL 1: Japanese Unexamined Patent Application Publication No. 2013-174531
PTL 2: Japanese Unexamined Patent Application Publication No. 62-124458
PTL 3: Japanese Unexamined Patent Application Publication No. 2008-32508

### Summary of Invention

### Technical Problem

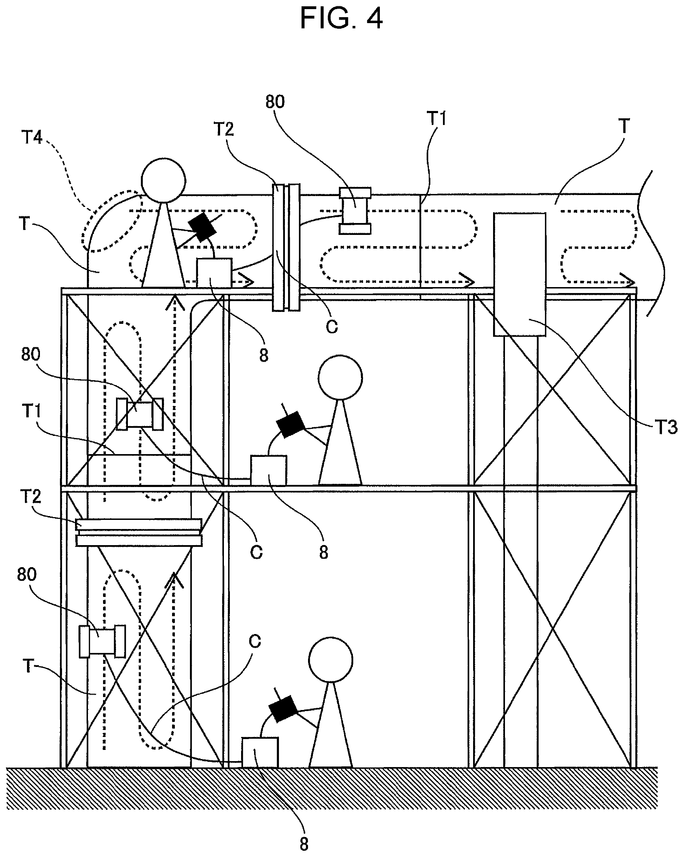

Patent Literatures 1 to 3 disclose a configuration in which, as illustrated in Fig. 4, an inspection apparatus 80 that runs while being attracted to the surface of an inspection object member T, such as a pipe, is connected by wired connection through a cable C to an inspection apparatus main body 8, such as a signal processor, a control apparatus, or an eddy-current flaw detector. A flaw signal detected by the inspection apparatus 80 is transmitted through the cable C to the inspection apparatus main body 8.

Although the inspection apparatus 80 disclosed in Patent Literatures 1 to 3 is capable of running over the surface of the inspection object member T, the inspection range of the inspection apparatus 80 is limited by the length of the cable C.

Patent Literature 3 discloses a configuration in which an eddy-current sensor unit that moves over the inspection object member is connected through a cable to an eddy-current flaw detector, which is mounted on a movable carriage. This allows the movable carriage to follow the movement of the eddy-current sensor unit, and makes it less likely that the inspection range of the eddy-current sensor unit will be limited. Even with this configuration, however, the movable carriage cannot run as the eddy-current sensor unit moves if there is no enough space for the movable carriage to run along the inspection object member, or if the conditions of the road surface on which the movable carriage runs along the inspection object member are not good enough. In such cases, the inspection range of the inspection apparatus is still limited by the length of the cable.

For the inspection apparatuses disclosed in Patent Literatures 1 to 3, lengthening the cable C to extend the inspection range increases the weight of the cable C applied to the inspection apparatus 80. As a result, the attracting force of the magnetic wheels for attracting the inspection apparatus 80 to the surface of the inspection object member T may become no longer able to support the weight of the cable C applied to the inspection apparatus 80, and the inspection apparatus 80 may fall off the inspection object member T. To prevent such a problem, the cable C has a limited length, and it has therefore been difficult to extend the inspection range of the inspection apparatus 80.

The inspection object member T, such as a pipe, is often installed high above the ground. To inspect each area of the inspection object member T, therefore, it has been required to build a scaffold S along the entire inspection object member T and carry out the inspection on the scaffold S, so as not to increase the weight of the cable C applied to the inspection apparatus 80. As a result, installing the scaffold S to inspect the inspection object member T has involved a considerable number of staff hours.

To detect flaws in an inspection object member with an ultrasonic inspection apparatus as disclosed in Patent Literature 1 or 2, immersion testing is generally adopted to reduce the influence of surface roughness of the inspection object member. Ultrasonic inspection using immersion testing involves using a large quantity of water, because an ultrasonic probe is locally immersed in water to avoid direct contact with the inspection object member. This has required the use of a hose for supplying water and a pump for supplying water to an area to be inspected. Without a pump, the inspection range has been significantly limited because water cannot be supplied to an area to be inspected if the area is high above the ground.

To solve the problems described above, the present invention aims to provide an inspection apparatus, an inspection system, and an inspection method that are capable of stably and efficiently inspecting an inspection object member for flaws over a wide range without limiting the range of inspection on the inspection object member. The present invention also aims to provide a member repair method.

### Solution to Problem

Measures to solve the problems described above are as follows.

An inspection apparatus is provided which comprises an inspection apparatus main body having a moving mechanism movable along a surface of an inspection object member; a measuring device provided on the inspection apparatus main body and configured to measure a wall thickness of the inspection object member; a transmitter provided on the inspection apparatus main body and configured to wirelessly transmit information about the wall thickness measured by the measuring device to the outside; and a battery provided on the inspection apparatus main body and configured to supply power to the moving mechanism, the measuring device, and the transmitter, wherein the inspection object member is a magnetic body, and the measuring device includes a magnetizer configured to apply a static magnetic field to the inspection object member to produce eddy current therein, an eddy current sensor configured to measure the eddy current produced in the inspection object member, and a phase detector configured to detect a phase of a waveform of the eddy current measured by the eddy current sensor, wherein the magnetizer is a permanent magnet.

In an embodiment, the moving mechanism is a magnetic crawler configured to run along the surface of the inspection object member while being attracted by magnetic force to the surface thereof.

In an embodiment, an -inspection system is provided which comprises the inspection apparatus described above and a control apparatus configured to receive the information wirelessly transmitted from the inspection apparatus and detect a flaw in the inspection object member on the basis of the information.

An inspection method is provided which comprises receiving, at a position distant from the inspection apparatus described above, the information wirelessly transmitted from the inspection apparatus; and detecting a flaw in the inspection object member on the basis of the information.

In an embodiment of the inspection method described above, the inspection object member is a hollow steel member.

A member repair method is provided which includes detecting the flaw in the inspection object member by the inspection method described above, and repairing a part of the inspection object member where the flaw has been detected.

### Advantageous Effects of Invention

In an inspection apparatus, an inspection system, and an inspection method and a member repair method according to the present invention, the inspection apparatus moves along the surface of an inspection object member to measure the thickness of the inspection object member, and wirelessly transmits information about the measured thickness to the outside. This eliminates the need for connecting a cable for transmitting, to the outside, the information measured by the inspection apparatus. Therefore, without being limited in inspection range by the length or weight of the cable, the inspection apparatus can stably and efficiently inspect the inspection object member for flaws over a wide range.

When the inspection object member is a magnetic body, a measuring device includes a magnetizer, an eddy current sensor, and a phase detector, and a permanent magnet is used as the magnetizer. The magnetizer applies a static magnetic field to the inspection object member to produce eddy current therein, the eddy current sensor measures the eddy current produced in the inspection object member, and the phase detector detects the phase of a waveform of the measured eddy current. This eliminates the need for supplying power to the magnetizer, and reduces power consumed to produce eddy current. Thus, power to be consumed by the inspection apparatus can be sufficiently supplied by a battery provided on the inspection apparatus main body.

When the moving mechanism is a magnetic crawler that runs along the surface of the inspection object member while being attracted by magnetic force to the surface of the inspection object member, the magnetic crawler is firmly in contact with the surface of the inspection object member even when the surface is curved. This increases the contact area and provides stable attracting force.

### Brief Description of Drawings

[Fig. 1] Fig. 1 is a schematic diagram illustrating how an inspection is carried out with an example of an inspection apparatus, an inspection system, and an inspection method according to the present invention.
[Fig. 2] Fig. 2 is a cross-sectional view illustrating an example of the inspection apparatus according to the present invention.
[Fig. 3] Fig. 3 is a block diagram illustrating a configuration of an example of the inspection system according to the present invention.
[Fig. 4] Fig. 4 is a schematic diagram illustrating how an inspection is carried out with an example of a conventional inspection apparatus.

### Description of Embodiments

With reference to the drawings, an embodiment of an inspection apparatus, an inspection system, and an inspection method and a member repair method according to the present invention will be described in detail.

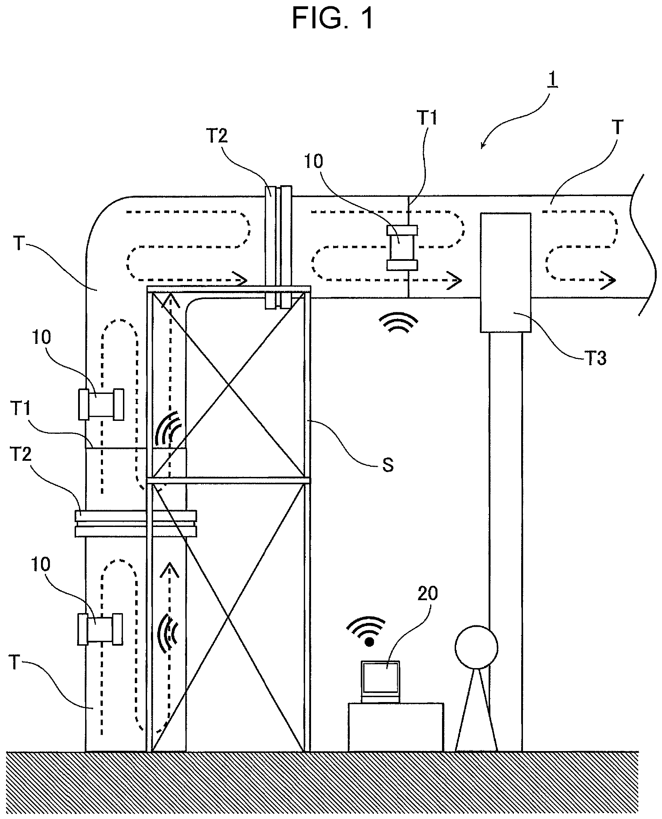

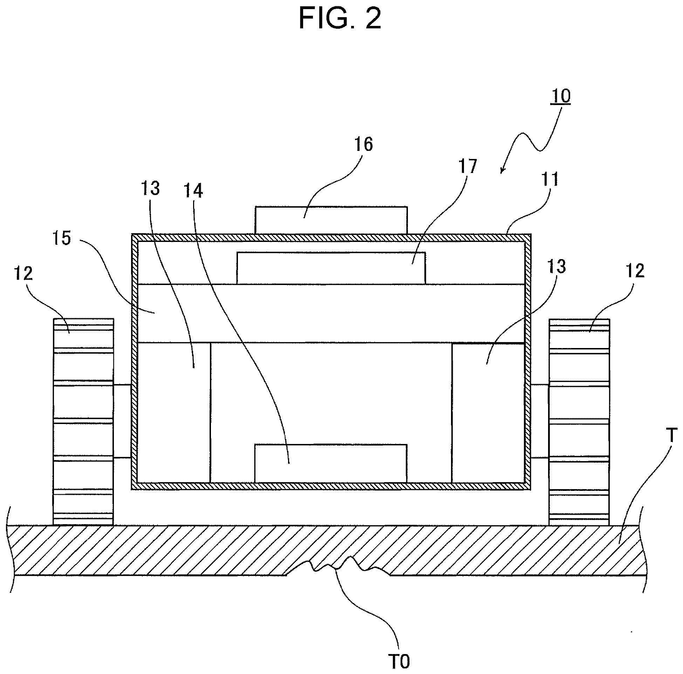

As illustrated in Fig. 1, an inspection apparatus 10, an inspection system 1, and an inspection method according to the present embodiment are used to detect a flaw T0 (see Fig. 2) in a pipe (inspection object member, hollow steel member) T constituted by a steel pipe, which is a magnetic body. The flaw T0 in the pipe T is, for example, wall-thinning or cracking caused by corrosion of, or damage to, the pipe T. A member repair method according to the present embodiment is used to correct the detected flaw T0.

Fig. 2 schematically illustrates a cross-section of the inspection apparatus 10 according to the present embodiment. A housing 11 in the inspection apparatus 10 is provided with moving mechanisms 12 on the side faces thereof. The moving mechanisms 12 are movable along the surface of the pipe T. The housing 11 and the moving mechanisms 12 constitute an inspection apparatus main body. The housing 11 in the inspection apparatus 10 has measuring devices 13 to 15, a wireless transceiver (transmitter) 16, and a battery 17 included therein or mounted thereon. The battery 17 supplies power to the moving mechanisms 12, the measuring devices 13 to 15, and the wireless transceiver 16.

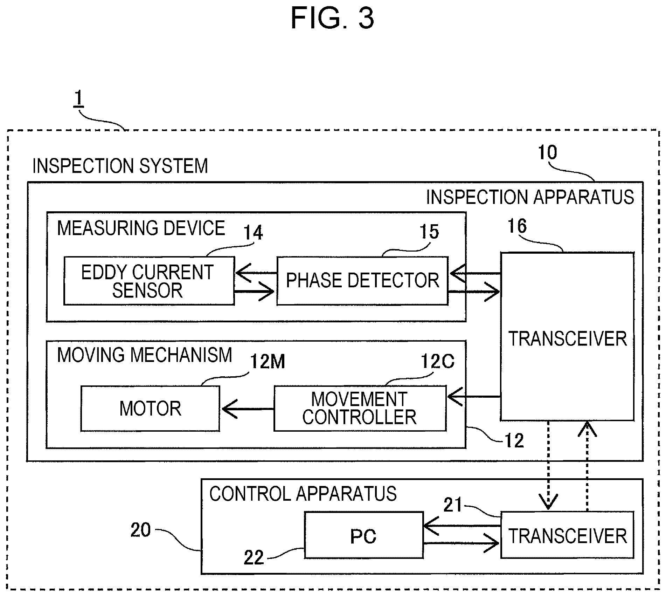

A general configuration of the inspection system 1 according to the present embodiment is illustrated in Fig. 3. The inspection system 1 includes the inspection apparatus 10 and a control apparatus 20. The control apparatus 20 receives information about the wall thickness of the pipe T wirelessly transmitted from the inspection apparatus 10, and detects the flaw T0 in the pipe T on the basis of this information.

As illustrated in Fig. 2, the moving mechanisms 12 of the inspection apparatus 10 are composed of magnetic crawlers capable to be attracted by magnetic force to the surface of the pipe T. The moving mechanisms 12 are disposed on both sides of the housing 11 in the inspection apparatus 10. A crawler, which is also called an endless track here, is a moving mechanism in which an annular belt formed of an elastic member or a series of shoes annularly connected by links is attached to and extended around a set of driving wheels, idle wheels and others. The crawler is thus capable of running on a surface having an irregular shape.

In the present embodiment, the moving mechanisms 12 each are a magnetic crawler having a structure in which magnets are embedded in an annular belt made of an elastic material, such as rubber. As the magnetic crawler moves, the inspection apparatus 10 moves on the surface of the pipe T while being attracted by magnetic force of the magnetic crawler to the surface of the pipe T.

As illustrated in Fig. 3, the moving mechanism 12 includes a motor 12M that moves driving wheels, and a movement controller 12C that controls the motion of the motor 12M.

As illustrated in Fig. 1, the pipe T is formed by joining a plurality of steel pipes. The pipe T has weld beads T1 and flanges T2 at joints of adjacent ones of the steel pipes. The pipe T is supported by a support T3 and secured to the ground.

The flanges T2 of the pipe T protrude from the surface of the pipe T much more than the weld beads T1. This often makes it difficult to move the inspection apparatus 10 over the flanges T2. To inspect the pipe T with the inspection apparatus 10, the inspection system 1, and the inspection method according to the present embodiment, therefore, an inspector places the inspection apparatus 10 in each section of the pipe T defined by the flanges T2.

If a section of the pipe T defined by the flanges T2 is high above the ground, a scaffold S is built near this section to place the inspection apparatus 10 on the surface of the pipe T. By wirelessly manipulating the inspection apparatus 10 from the control apparatus 20 on the ground, for example, the inspection apparatus 10 is moved along the surface of the pipe T within the section defined by the flanges T2, to an area away from the scaffold S.

As a method for measuring the wall thickness of the pipe T, which is an inspection object member, the inspection apparatus 10 according to the present embodiment adopts an eddy current method. Specifically, as illustrated in Fig. 2, the measuring devices 13 to 15 include a magnetizer 13 composed of a permanent magnet, an eddy current sensor 14, and a phase detector 15. The magnetizer 13 applies a static magnetic field to the pipe T, which is a magnetic body, to produce eddy current therein. Although the magnetizer 13 (permanent magnet) illustrated in Fig. 2 is constituted by a pair of members spaced apart from each other, the shape of the magnetizer 13 is not limited to that illustrated in Fig. 2. For example, the magnetizer 13 may be constituted by a single inverse U-shaped member. The eddy current produced in the pipe T is measured by the eddy current sensor 14. The waveform of the eddy current measured by the eddy current sensor 14 is transmitted to the phase detector 15, which detects the phase of the eddy current to measure the wall thickness of the pipe T. When measuring the wall thickness of the pipe T, the inspection apparatus 10 is simply required to measure at least surface irregularities (or variations in thickness) of the pipe T, and is not necessarily required to measure the absolute value (or numeric value) of the thickness of the pipe T.

Information about the wall thickness of the pipe T measured by the measuring devices 13 to 15 is wirelessly transmitted from the wireless transceiver 16 to a wireless transceiver 21 of the control apparatus 20 described below.

The control apparatus 20 is composed of a general-purpose personal computer (PC). Specifically, as illustrated in Fig. 3, the control apparatus 20 includes the wireless transceiver 21 and a central processing unit (CPU) 22. The wireless transceiver 21 receives information about the wall thickness of the pipe T wirelessly transmitted from the wireless transceiver 16 of the inspection apparatus 10. The CPU 22 processes the information received by the wireless transceiver 21.

The CPU 22 wirelessly transmits a signal from the wireless transceiver 21 of the control apparatus 20 to the wireless transceiver 16 of the inspection apparatus 10 automatically or in response to, for example, an inspector's operation. The CPU 22 thus controls the inspection apparatus 10 in such a way that it runs over the entire region of the surface of the pipe T, measures the wall thickness over the entire surface of the pipe T, and wirelessly transmits information about the measured wall thickness to the control apparatus 20. The CPU 22 then detects the flaw T0 in the pipe T on the basis of the information about the wall thickness of the pipe T transmitted from the inspection apparatus 10. Specifically, if the amount of change in wall thickness is greater than or equal to a predetermined value, the CPU 22 determines that there is the flaw T0 in the pipe T. The CPU 22 then notifies the inspector of detection of the flaw T0 in the pipe T, for example, through display on the screen. Software for executing the series of processing described above is installed on the PC composing the control apparatus 20. As the control apparatus 20, another information processing device, such as a tablet terminal, may be used instead of the PC. As described above, the control apparatus 20 installed at a distance from the inspection apparatus 10 receives information about the wall thickness wirelessly transmitted from the inspection apparatus 10, and detects the flaw T0 in the pipe T. The inspection method according to the present embodiment is thus implemented.

The flaw T0 in the pipe T is detected by the inspection method described above, and a part of the pipe T where the flaw T0 has been detected is repaired. The member repair method according to the present embodiment is thus implemented.

In the inspection apparatus 10, the inspection system 1, and the inspection method and the member repair method according to the present embodiment, the inspection apparatus 10 moves along the surface of the pipe T to measure the wall thickness of the pipe T, and wirelessly transmits detected information about the wall thickness to the control apparatus 20. Since this eliminates the need for connecting a communication cable for transmitting the information detected by the inspection apparatus 10, the moving range of the inspection apparatus 10 is not limited by the length or weight of the cable. In particular, even when the pipe T is installed high above the ground, the inspection range is not limited by the length or weight of the communication cable.

As described above, there is no need to connect a communication cable for controlling the inspection apparatus 10 or transmitting detected information about the wall thickness. This facilitates handling of the inspection apparatus 10 and the inspection system 1. Also, the range of inspection of the pipe T is not limited by the length or weight of the communication cable. The pipe T can be easily and efficiently inspected for the flaw T0 over a wide range, and the efficiency of inspection can be improved.

The inspection apparatus 10 according to the present embodiment adopts an eddy current method. This eliminates the need for a water supply hose and a pump otherwise required for an ultrasonic inspection apparatus, facilitates handling of the inspection apparatus 10 and the inspection system 1, and improves efficiency of inspection. In particular, the magnetizer 13, which applies a static magnetic field to the inspection object member to produce eddy current, does not require power, because a permanent magnet is used as the magnetizer 13.

Accordingly, the inspection apparatus 10 can be operated by simply supplying power to the moving mechanism 12, the eddy current sensor 14, the phase detector 15, and the wireless transceiver 16. The power consumed by the inspection apparatus 10 is significantly reduced. Thus, power to be consumed by the inspection apparatus 10 can be sufficiently supplied by the battery 17 in the housing 11 of the inspection apparatus 10. Therefore, the inspection apparatus 10 according to the present embodiment can perform wireless inspection and does not require wired connection through a cable, such as a power supply cable, which is often required when an electromagnet is used as the magnetizer that produces eddy current, and thus, inspection can be carried out over a much wider range than with an inspection apparatus connected by wired connection.

The inspection apparatus 10 according to the present embodiment uses a magnetic crawler as the moving mechanism 12. The magnetic crawler is firmly in contact with the pipe T having a curved surface and provides a large contact area. This ensures more stable attracting force than with a conventional moving mechanism that is composed of, for example, by magnetic wheels.

Therefore, the inspection apparatus 10 can stably run without falling off even at a bent portion or a stepped portion, such as the weld bead T1, of the pipe T. The inspection apparatus 10 can thus run without avoiding such a bent portion or a stepped portion. An elastic material is used to form a belt or shoes of the magnetic crawler composing the moving mechanism 12, and magnets are embedded in the elastic members. Therefore, even when the magnetic crawler rubs over the surface of the pipe T during movement (particularly turning) of the inspection apparatus 10, the inspection apparatus 10 can run without causing flaws, such as scratches and peeling, in the surface or coating thereon of the pipe T. It is thus possible to reduce damage to the pipe T caused by an inspection operation.

Using a magnetic crawler as the moving mechanism 12 can eliminate the need for a vacuum pump which is required to perform vacuum attraction as an attracting method. A significant reduction in power consumption can thus be achieved.

The inspection apparatus 10, the inspection system 1, and the inspection method according to the present embodiment may require installing the scaffold S when, as described above, a section of the pipe T defined by the flanges T2 is high above the ground. However, unlike in the case of using a conventional inspection apparatus with magnetic wheels, the scaffold S does not need to be built along the entire inspection object member. It is thus possible to significantly reduce the number of man-hours for installation of the scaffold S required to inspect the inspection object member.

The information about the wall thickness wirelessly transmitted from the inspection apparatus 10 is received by the control apparatus 20 installed at a distance from the inspection apparatus 10. The inspector can thus carry out the inspection while constantly checking the result of the inspection through the control apparatus 20.

Although an example of using an eddy-current inspection apparatus has been described in the aforementioned embodiments, the present invention is not limited to this. An inspection apparatus of another type, such as an ultrasonic inspection apparatus, may be used. In the case of using an ultrasonic inspection apparatus, for example, installing a small water tank in the inspection apparatus can eliminate the need for using a hose and a pump for supplying water to the inspection apparatus, make it possible to operate the inspection apparatus wirelessly, and make it possible to achieve substantially the same effects as the embodiments described above.

In the case of using an eddy-current inspection apparatus, an electromagnet, instead of a permanent magnet, may be used as the magnetizer. Also, instead of a magnetic crawler, a moving mechanism using vacuum attraction or magnetic wheels may be used as the moving mechanism.

In the aforementioned embodiments, an example has been described in which flaws, such as wall-thinning and cracking, caused by corrosion of or damage to the pipe T are detected and corrected. However, an inspection object member to be inspected and repaired in the present invention is not limited to this. For example, for various inspection object members including various hollow steel members such as tanks, non-hollow or solid steel members such as shaped steel members, and magnetic bodies, the present invention can be widely used to measure the thickness at an area constituting the surface, and to detect flaws.

In the embodiments described above, the control apparatus detects a flaw on the basis of information about changes in wall thickness wirelessly transmitted from the inspection apparatus. Alternatively, a microcomputer (not shown) provided on the inspection apparatus may be configured to detect a flaw and wirelessly transmit the result of the detection to the control apparatus.

### Reference Signs List

- 1:: inspection system
- 10:: inspection apparatus
- 11:: housing (inspection apparatus main body)
- 12:: magnetic crawler (moving mechanism)
- 13:: magnetizer (measuring device)
- 14:: eddy current sensor (measuring device)
- 15:: phase detector (measuring device)
- 16:: wireless transceiver (transmitter)
- 17:: battery
- 20:: control apparatus
- 21:: wireless transceiver
- 22:: CPU
- T:: pipe (hollow steel member, inspection object member)
- T0:: flaw
- T1:: weld bead
- T2:: flange
- T3:: support
- S:: scaffold

## Claims

1. An inspection apparatus (10) comprising:
an inspection apparatus main body (11) having a moving mechanism (12) movable along a surface of an inspection object member (T);
a measuring device (13, 14, 15) provided on the inspection apparatus main body (11) and configured to measure a wall thickness of the inspection object member (T);
a transmitter (16) provided on the inspection apparatus main body (11) and configured to wirelessly transmit information about the wall thickness measured by the measuring device (13, 14, 15) to the outside; and
a battery (17) provided on the inspection apparatus main body (11) and configured to supply power to the moving mechanism (12), the measuring device (13, 14, 15), and the transmitter (16),
wherein the inspection object member (T) is a magnetic body; and
the measuring device (13, 14, 15) includes a magnetizer (13) configured to apply a static magnetic field to the inspection object member (T) to produce eddy current therein, an eddy current sensor (14) configured to measure the eddy current produced in the inspection object member (T), and a phase detector (15) configured to detect a phase of a waveform of the eddy current measured by the eddy current sensor (14),
**characterized in that** the magnetizer (13) is a permanent magnet.

2. The inspection apparatus (10) according to Claim 1, wherein the moving mechanism (12) is a magnetic crawler (12) configured to run along the surface of the inspection object member (T) while being attracted by magnetic force to the surface thereof.

3. An inspection system (1) comprising:
the inspection apparatus (10) according to Claim 1 or 2; and
a control apparatus (20) configured to receive the information wirelessly transmitted from the inspection apparatus (10) and detect a flaw (T0) in the inspection object member (T) on the basis of the information.

4. An inspection method comprising receiving, at a position distant from the inspection apparatus (10) according to Claim 1 or 2, the information wirelessly transmitted from the inspection apparatus (10); and detecting a flaw (T0) in the inspection object member (T) on the basis of the information.

5. The inspection method according to Claim 4, wherein the inspection object member (T) is a hollow steel member (T).

6. A member repair method comprising:
detecting the flaw (T0) in the inspection object member (T) by the inspection method according to Claim 5; and
repairing a part of the inspection object member (T) where the flaw (T0) has been detected.

## Patentansprüche

1. Eine Inspektionsvorrichtung (10), aufweisend
einen Hauptkörper (11) der Inspektionsvorrichtung mit einem Bewegungsmechanismus (12), der entlang einer Oberfläche eines Inspektionsobjektteils (T) bewegbar ist;
eine Messvorrichtung (13, 14, 15), die an dem Hauptkörper (11) der Inspektionsvorrichtung vorgesehen und so konfiguriert ist, dass sie eine Wanddicke des Inspektionsobjektteils (T) misst;
einen Sender (16), der an dem Hauptkörper (11) der Inspektionsvorrichtung vorgesehen und so konfiguriert ist, dass er Informationen über die von der Messvorrichtung (13, 14, 15) gemessene Wanddicke drahtlos nach außen überträgt; und
eine Batterie (17), die an dem Hauptkörper (11) der Inspektionsvorrichtung vorgesehen und so konfiguriert ist, dass sie den Bewegungsmechanismus (12), die Messvorrichtung (13, 14, 15) und den Sender (16) mit Strom versorgt,
wobei das Inspektionsobjektteil (T) ein magnetischer Körper ist; und
die Messvorrichtung (13, 14, 15) einen Magnetisierer (13) hat, der so konfiguriert ist, dass er ein statisches Magnetfeld an das Inspektionsobjektteil (T) anlegt, um darin einen Wirbelstrom zu erzeugen, einen Stromsensor (14), der so konfiguriert ist, dass er den in dem Inspektionsobjektteil (T) erzeugten Wirbelstrom misst, und einen Phasendetektor (15), der so konfiguriert ist, dass er eine Phase einer Wellenform des von dem Stromsensor (14) gemessenen Wirbelstroms erfasst, umfasst
**dadurch gekennzeichnet, dass** der Magnetisierer (13) ein Permanentmagnet ist.

2. Die Inspektionsvorrichtung (10) nach Anspruch 1, wobei der Bewegungsmechanismus (12) ein magnetischer Crawler (12) ist, der so konfiguriert ist, dass er entlang der Oberfläche des Elements (T) des Inspektionsobjekts läuft, während er durch magnetische Kraft zu dessen Oberfläche angezogen wird.

3. Ein Inspektionssystem (1), das aufweist:
die Inspektionsvorrichtung (10) nach Anspruch 1 oder 2; und
eine Steuereinheit (20), die so konfiguriert ist, dass sie die von der Inspektionsvorrichtung (10) drahtlos übertragenen Informationen empfängt und auf der Grundlage der Informationen einen Fehler (T0) in dem Inspektionsobjektteil (T) erkennt.

4. Ein Verfahren weist auf das Empfangen der von der Inspektionsvorrichtung (10) drahtlos übertragenen Informationen an einer von der Inspektionsvorrichtung (10) entfernten Position gemäß Anspruch 1 oder 2 und das Erkennen eines Fehlers (T0) in dem Inspektionsobjektteil (T) auf der Grundlage der Informationen.

5. Das Verfahren nach Anspruch 4, wobei das Inspektionsobjektteil (T) ein hohles Stahlteil (T) ist.

6. Ein Verfahren zur Reparatur eines Bauteils, das aufweist
Erkennen des Fehlers (T0) in dem Inspektionsobjektteil (T) durch das Verfahren nach Anspruch 5; und
Reparieren eines Teils des Inspektionsobjektteils (T), in dem der Fehler (T0) festgestellt wurde.

## Revendications

1. Appareil d'inspection (10) comprenant :
un corps principal d'appareil d'inspection (11) ayant un mécanisme mobile (12) mobile le long d'une surface d'un élément objet d'inspection (T) ;
un dispositif de mesure (13, 14, 15) installé sur le corps principal d'appareil d'inspection (11) et configuré pour mesurer une épaisseur de paroi de l'élément objet d'inspection (T) ;
un émetteur (16) installé sur le corps principal d'appareil d'inspection (11) et configuré pour transmettre sans fil des informations concernant l'épaisseur de paroi mesurée par le dispositif de mesure (13, 14, 15) vers l'extérieur ; et
une batterie (17) installée sur le corps principal d'appareil d'inspection (11) et configurée pour fournir de l'énergie au mécanisme mobile (12), au dispositif de mesure (13, 14, 15), et à l'émetteur (16),
dans lequel l'élément objet d'inspection (T) est un corps magnétique ; et
le dispositif de mesure (13, 14, 15) comporte un magnétiseur (13) configuré pour appliquer un champ magnétique statique à l'élément objet d'inspection (T) afin de produire un courant de Foucault à l'intérieur, un capteur de courant de Foucault (14) configuré pour mesurer le courant de Foucault produit dans l'élément objet d'inspection (T), et un détecteur de phase (15) configuré pour détecter une phase d'une forme d'onde du courant de Foucault mesuré par le capteur de courant de Foucault (14),
**caractérisé en ce que** le magnétiseur (13) est un aimant permanent.

2. Appareil d'inspection (10) selon la revendication 1, dans lequel le mécanisme mobile (12) est un robot d'exploration magnétique (12) configuré pour se déplacer le long de la surface de l'élément objet d'inspection (T) tout en étant attiré par une force magnétique vers la surface de celui-ci.

3. Système d'inspection (1) comprenant :
l'appareil d'inspection (10) selon la revendication 1 ou 2 ; et
un appareil de commande (20) configuré pour recevoir les informations transmises sans fil par l'appareil d'inspection (10) et détecter un défaut (T0) dans l'élément objet d'inspection (T) sur la base des informations.

4. Procédé d'inspection comprenant la réception, à une position éloignée de l'appareil d'inspection (10) selon la revendication 1 ou 2, des informations transmises sans fil par l'appareil d'inspection (10) ; et la détection d'un défaut (T0) dans l'élément objet d'inspection (T) sur la base des informations.

5. Procédé d'inspection selon la revendication 4, dans lequel l'élément objet d'inspection (T) est un élément creux en acier (T).

6. Procédé de réparation d'élément comprenant :
la détection du défaut (T0) dans l'élément objet d'inspection (T) par le procédé d'inspection selon la revendication 5 ; et
la réparation d'une partie de l'élément objet d'inspection (T) où le défaut (T0) a été détecté.
